# EUROPEAN PATENT SPECIFICATION

(11) **EP 4 050 244 B1**
(45) Date of publication and mention of the grant of the patent: **17.07.2024**
(21) Application number: 22157978.2
(22) Date of filing: 22.02.2022
(51) Int. Cl.: F16K 1/46, F16K 17/04, F16K 25/00, F25B 49/00

(54) **VALVE**
VENTIL
SOUPAPE

(30) Priority: 24.02.2021 JP 2021027280
(43) Date of publication of application: 31.08.2022
(73) Proprietor: Fujikoki Corporation, Tokyo 158-0082 (JP)
(72) Inventor: ASANO, Hisashi, Tokyo, 158-0082 (JP)
(74) Representative: Ter Meer Steinmeister & Partner

(56) References cited:
- EP-A1- 1 870 620
- EP-A1- 2 851 591
- CN-A- 104 864 134
- DE-A1- 102007 026 119
- FR-A3- 2 725 490
- JP-A- H09 100 926
- JP-U- S52 143 148
- US-A- 4 044 998

## Description

### TECHNICAL FIELD

The present invention relates to a valve gear according to claim 1, and more particularly to a valve body structure which releases a refrigerant into the air in a case where a refrigerant pressure within a refrigerant circuit abnormally rises.

### BACKGROUND ART

A safety valve has been conventionally used in a refrigeration cycle system including a refrigerant circuit such as an air conditioner, a refrigerating device and a freezing device for releasing a refrigerant into the external portion in order to prevent the system from being broken when the refrigerant pressure abnormally rises, and for reducing the refrigerant pressure.

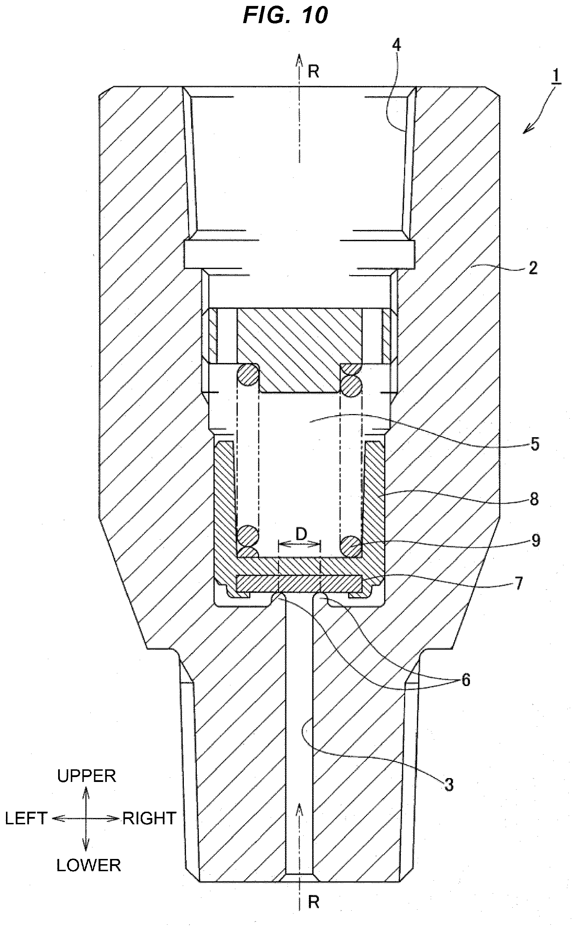

Fig. 10 shows an example of the safety valve mentioned above. As shown in this drawing, a conventional safety valve 1 has a valve main body 2 which has a valve chamber 5 in an inner portion thereof, a valve body 7 which is disposed in the valve chamber 5 so as to be movable forward and backward (movable upward and downward) with respect to valve seat 6, a valve holder 8 which retains the valve body 7, and a valve closing spring 9 which biases the valve body 7 toward the valve seat 6 via the valve holder 8, is provided in one end (a lower end) of the valve main body 2 with an introduction channel 3 which can introduce a refrigerant into the valve chamber 5, and is provided in the other end (an upper end) of the valve main body 2 with a release channel 4 which can release the refrigerant into the external portion (into the air) from the valve chamber 5. Further, the valve seat 6 is formed in an end portion (an upper end) of the introduction channel 3 in the valve chamber 5 side, and the other end (a lower end) of the introduction channel 3 is connected to the refrigerant circuit.

In a case where the pressure of the refrigerant introduced into the valve through the introduction channel 3 is equal to or less than a fixed pressure (a spring load of the valve closing spring 9), a state in which the valve body 7 is seated on the valve seat 6 due to a biasing force of the valve closing spring 9 and the flow channel from the introduction channel 3 to the released channel 4 is shut off is maintained. On the contrary, in a case where the refrigerant pressure goes beyond the fixed pressure (the spring load of the valve closing spring 9), the valve body 7 moves backward (ascends) from the valve seat 6 against the biasing force of the valve closing spring 9, so that the flow channel from the introduction channel 3 to the release channel 4 is released. As a result, the refrigerant within the refrigerant circuit is released into the external portion through the introduction channel 3, the valve chamber 5 and the release channel 4 (refer to an arrow R), and the refrigerant pressure within the refrigerant circuit can be lowered.

Reference sign D in Fig. 10 denotes a diameter of a portion where the valve body 7 comes into contact with the valve seat 6, that is, a diameter of an area which receives the refrigerant pressure among a surface of the valve body 7 in the valve seat side (this diameter is called as "pressure receiving diameter"), and a spring load of the valve closing spring 9 is set on the basis of the pressure receiving diameter.

Further, the valve body 7 is often formed by a soft material such as a resin or a rubber which is excellent in a sealing property since it is necessary to prevent the refrigerant from leaking out to the external portion in normal times.

Further, the following patent literature 1 is provided for disclosing the safety valve as mentioned above.

### CITATION LIST

### PATENT LITERATURE

Patent Literature 1: Japanese Unexamined Patent Publication No. H09-100926

EP 1 870 620 A1 discloses a check valve capable of attaining high sealability in either case where a differential pressure is high or low. This check valve comprises a valve body assembly contacting and separating from a valve seat portion for communicating and blocking a fluid passage. The valve body assembly comprises a valve body, a low pressure seal portion constituted out of soft material and a high pressure seal portion constituted out of harder material than the low pressure seal portion. In blocking a fluid passage, when a differential pressure between an upstream path and a downstream path in the fluid passage is relatively low, the low pressure seal portion comes into close contact with a protrusion to block the fluid passage, while when the differential pressure is relatively high, the low pressure seal portion is compressively deformed by the differential pressure and the high pressure seal portion comes into close contact with the valve seat body, thus blocking the fluid passage.

Similar valve devices are disclosed by US 4,044,998 A, EP 2 851 591 A1, DE 10 2007 026 119 A1, FR 2 725 490 A3 and CN 104864134 A.

### SUMMARY OF INVENTION

### TECHNICAL PROBLEM

In the meantime, a creep deformation is a concern in the valve body formed by the resin or the rubber. In a case where the valve body 7 always pressed against the valve seat 6 by the biasing force of the valve closing spring 9 deforms with time, and the pressure receiving diameter D varies, there is a risk of malfunction that the valve is not opened even when the pressure goes beyond the set pressure (the spring load of the valve closing spring), or the valve is opened even below the set pressure.

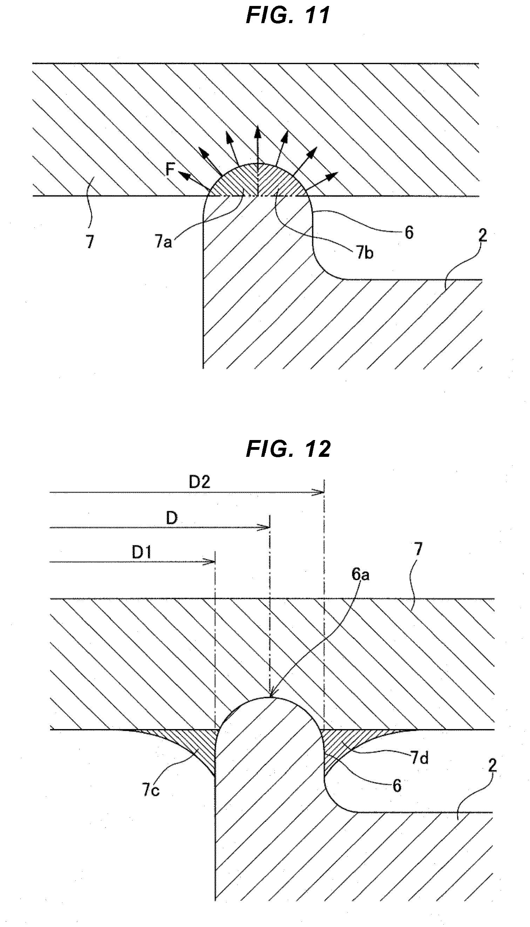

More specifically, the valve seat 6 is formed by a metal material such as an SUS (a stainless steel) or a brass as shown in Fig. 11. On the contrary, the valve body 7 is formed by a comparatively soft material such as the resin or the rubber. Therefore, the valve body 7 is continually pressed against the valve seat 6, and the valve seat 6 accordingly eats into the lower surface of the valve body 7 little by little (reference sign F in Fig. 11 denotes a surface pressure which the valve body 7 receives from the valve seat 6). Further, soft valve body construction materials 7a and 7b are pushed aside circumferentially at a degree that the valve seat 6 eats into, and the valve body may deform so as to protrude up (hang down) along an inner peripheral surface or an outer peripheral surface of the valve seat 6 as shown in Fig. 12.

When the valve body 7 is deformed in such a manner that the deformed portion is formed in the inner side (the introduction channel side) of the valve seat 6 (refer to reference sign 7c in Fig. 12), an actual pressure receiving diameter D1 becomes smaller than an original pressure receiving diameter D, and an area receiving a refrigerant pressure received by the valve body 7 through the introduction channel 3 becomes smaller. As a result, there can be generated a case that the valve is not opened even if a spring load of the valve closing spring 9 becomes relatively greater and the pressure within the refrigerant cycle goes beyond the set pressure. On the contrary, when the valve body is deformed in such a manner that the deformed portion is formed in the outer side of the valve seat 6 (refer to reference sign 7d in Fig. 12), an actual pressure receiving diameter D2 becomes larger than the original pressure receiving diameter D, and the area receiving the refrigerant pressure received by the valve body 7 becomes larger. As a result, there can be generated a case that the valve is opened even if the pressure is equal to or less than the set pressure.

In particular, in a case where the refrigerant employs CO2, the refrigerant cycle is under high pressure, and the spring load of the valve closing spring 9 disposed in correspondence to this refrigerant circuit is enlarged. As a result, the force by which the valve body 7 is pressed against the valve seat 6 is strong, and the deformation tends to be generated. Further, if the valve body 7 is unevenly deformed, there is a risk that the contact state with the valve seat 6 changes, and the valve leakage is generated.

In the meantime, it is also possible to construct the valve body 7 by a material that is hard to deform, for example, a metal material such as SUS (stainless steel) and brass in the same manner as the valve seat (the valve main body). However, it is not preferable to use the valve body made of the metal in the safety valve. This is because in the safety valve, it is desirable to make the valve leakage zero since the refrigerant is released into the air, while the metal valve body is not as flexible as a resin valve body and tends to generate the valve leakage.

Therefore, an object of the present invention is to prevent or suppress change in a pressure receiving diameter (fluctuation in a valve opening pressure) and generation of a valve leakage which are caused by a deformation over time of a valve body made of a soft material such as a resin or a rubber.

### SOLUTION TO PROBLEM

In order to solve the problem and achieve the object mentioned above, a valve gear according to the present invention as defined by claim 1 is a valve gear including a valve main body which includes a valve chamber communicating with an introduction channel for introducing a refrigerant and a release channel for releasing the refrigerant to an external portion, a valve seat which is formed in an end portion of the introduction channel in the valve chamber side, a valve body which is disposed within the valve chamber so as to be movable forward and backward with respect to the valve seat, and a valve closing spring which biases the valve body toward the valve seat, wherein in a case where the refrigerant flowing into the valve gear through the introduction channel is equal to or less than a fixed pressure, the valve body is seated on the valve seat on the basis of a biasing force of the valve closing spring, thereby shutting off a flow channel from the introduction channel to the release channel, and in a case where the refrigerant flowing into the valve gear from the introduction channel becomes greater than the fixed pressure, the valve body moves backward from the valve seat against the biasing force of the valve closing spring, thereby opening the flow channel from the introduction channel to the release channel and releasing the refrigerant to the external portion, and wherein the valve body is made of a soft material and is provided with a depressed portion in a surface of the valve body in a side facing the introduction channel.

In the valve gear according to the present invention, the depressed portion is disposed in the surface in the side facing the introduction channel which is always exposed to the refrigerant pressure, and the deformation over time (creep deformation) of the valve body is introduced to the depressed portion by deforming the depressed portion, thereby suppressing the deformation of the contact portion with the valve seat. More specifically, in the present invention, the deformation of the valve body is proactively introduced to the depressed portion (in other words, the deformation of the valve seat contact portion is absorbed by the depressed portion or transferred to the depressed portion) by disposing the easily deformable depressed portion near the contact portion of the valve body with the valve seat.

Therefore, according to the present invention, even if the creep deformation is generated in the valve body, the pressure receiving diameter is hard to change, and it is possible to suppress the fluctuation (error for an assumed pressure) in the valve opening pressure. This point will be further mentioned in detail on the basis of the drawings in the description of an embodiment mentioned later.

In the present invention, the soft material constructing the valve body is a material containing a resin (synthetic resin or natural resin) or a rubber (synthetic rubber or natural rubber) as a major component, for example.

The "soft material" is not necessarily a single soft material or not necessarily constructed only by the soft material, or may be a composite material (a mixed material) including plural kinds of materials. More specifically, the "soft material" in the present invention may be constructed by plural kinds of resins or rubber materials, for example, or may include a hard material such as a metal or a ceramics. In short, the "soft material" in the present invention means a material which can deform over time as a whole of the valve body (the material constructing the valve body).

The depressed portion is typically constructed by any one of a groove, a hole and a step.

The depressed portion may include a groove which is formed in an outer side of the valve seat in such a manner as to surround the valve seat. In this case, the term "outer side" means a farther side than the valve seat (the contact portion of the valve body with the valve seat) as viewed from a center axis of the valve seat (or the valve body). Further, on the contrary, the term "inner side" mentioned later means a nearer side than the valve seat (the contact portion of the valve body with the valve seat) as viewed from the center axis of the valve seat (or the valve body).

Further, according to a preferable aspect of the present invention, the valve seat has an annular entire shape, and the groove is formed in such a manner as to extend in parallel to the valve seat at a fixed distance from the valve seat. This is because the deformation over time of the valve body is even over a whole of the valve body. Thus, it is possible to prevent the contact state of the valve body with the valve seat from being uneven and prevent the valve leakage from being generated.

Further, the groove may have a cross sectional shape of any of a rectangular (rectangle or square), triangular, polygonal or arc-shaped form.

Further, the depressed portion may include a hole which is formed in an inner side of the valve seat. In this case, for the same reason as the groove mentioned above (for the reason of making the deterioration over time of the valve body even), the hole is preferably formed in such a manner that a distance between an outer edge (peripheral edge) of the hole and the valve seat is fixed.

### EFFECT OF INVENTION

According to the present invention, it is possible to prevent the change in the pressure receiving diameter (the fluctuation in the valve opening pressure) and the generation of the valve leakage caused by the deformation over time of the valve body which is made of the soft material such as the resin or the rubber.

The other objects, features and advantages of the present invention will be apparent from the following description of the embodiment according to the present invention mentioned on the basis of the accompanying drawings. In the drawings, same reference numerals denote the same or corresponding portions.

### BRIEF DESCRIPTION OF DRAWINGS

Fig. 1 is a vertical cross sectional view showing a valve-closed state of a valve gear (a safety valve) according to an embodiment of the present invention.
Fig. 2 is a vertical cross sectional view showing a valve body and a valve seat (a cut surface along a line A-A in Fig. 3) of the valve gear according to the embodiment.
Fig. 3 is a bottom elevational view showing the valve body of the valve gear according to the embodiment.
Fig. 4 is a vertical cross sectional view showing the valve seat and the valve body (a state in which the valve seat eats into the valve body in a valve-closed state) of the valve gear according to the embodiment.
Fig. 5 is a vertical cross sectional view showing the valve seat and the valve body (a state in which the valve body undergoes a creep deformation) of the valve gear according to the embodiment.
Fig. 6 is a vertical cross sectional view showing an example of a construction of the valve body of the valve gear according to the embodiment in the same manner as Fig. 2.
Fig. 7 is a vertical cross sectional view showing the other example of the construction of the valve body of the valve gear according to the embodiment together with a valve holder.
Fig. 8 is a vertical cross sectional view showing further the other example of the construction of the valve body of the valve gear according to the embodiment together with the valve holder.
Fig. 9 is a vertical cross sectional view showing further the other example of the construction of the valve body of the valve gear according to the embodiment together with the valve holder.
Fig. 10 is a vertical cross sectional view showing an example (a valve-closed state) of a conventional safety valve.
Fig. 11 is a vertical cross sectional view showing a valve seat and a valve body of the conventional safety valve (a state in which the valve seat eats into the valve body in a valve-closed state).
Fig. 12 is a vertical cross sectional view showing the valve seat and the valve body of the conventional safety valve (a state in which the valve body undergoes a creep deformation).

### DESCRIPTION OF EMBODIMENTS

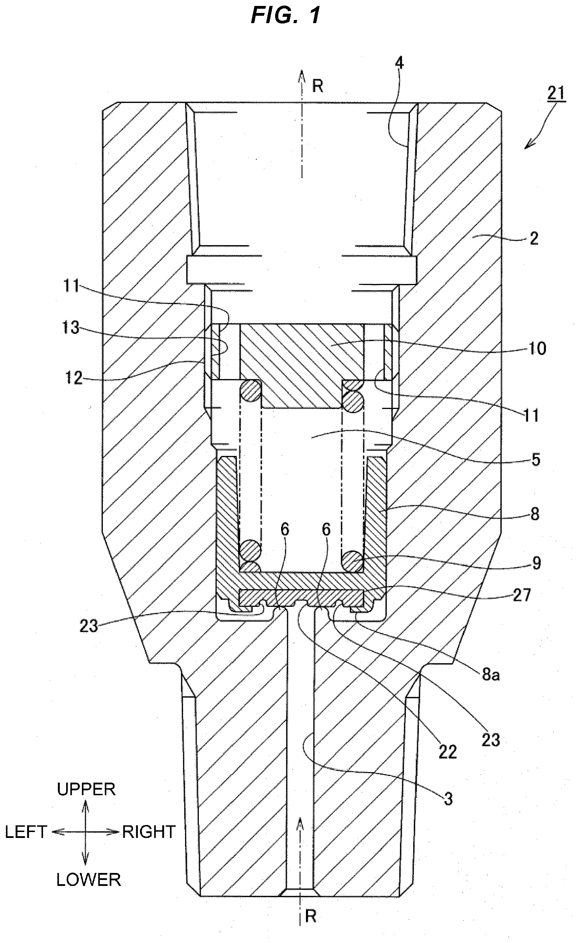

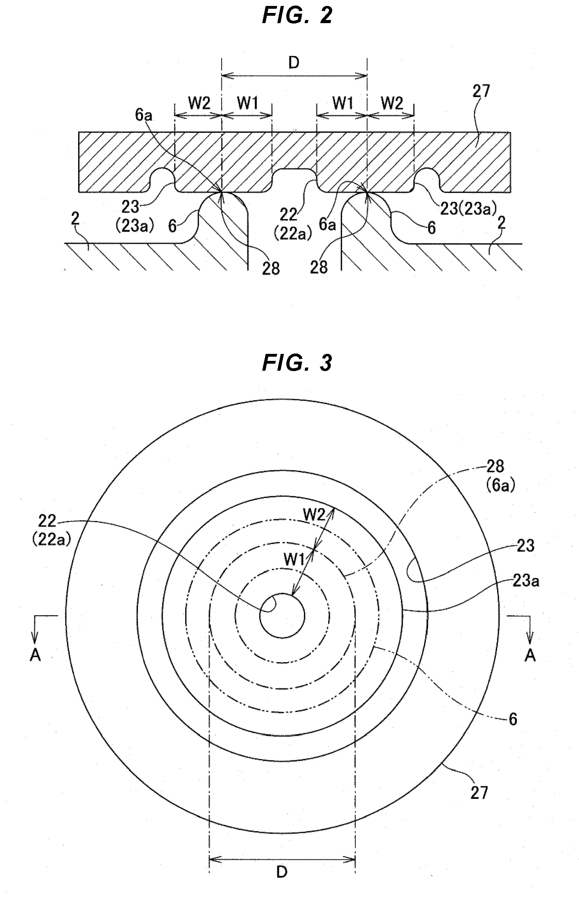

As shown in Figs. 1 to 3, a valve gear 21 according to an embodiment of the present invention is a safety valve for releasing a refrigerant into the air when a refrigerant pressure within a refrigerant circuit abnormally rises, and includes a valve main body 2 which is provided in an inner portion thereof with a valve chamber 5 communicating with an introduction channel 3 introducing the refrigerant and a release channel 4 releasing the refrigerant into an external portion (into the air), a valve seat 6 which is formed in an end portion (an upper end portion) of the introduction channel 3 in a valve chamber side, a valve body 27 which is disposed within the valve chamber 5 so as to be movable forward and backward (movable upward and downward) with respect to the valve seat 6, a valve holder 8 which retains the valve body 27 and moves up and down together with the valve body 27, a valve closing spring 9 which biases the valve body 27 toward the valve seat 6 via the valve holder 8, and a spring receiving member 10 which supports an upper end portion of the valve closing spring 9.

Each of the drawings shows a two-dimensional coordinate coordinates indicating vertical and lateral directions which are orthogonal to each other, and the present invention will be described on the basis of these direction. However, the valve gear according to the present invention and the safety valve according to the embodiment can be used in various orientations, and each of these directions is accordingly provided for convenience of description and does not restrict the structure of each of the portions of the present invention.

The introduction channel 3 extends vertically upward from a lower surface of the valve main body 2, and communicates with the valve chamber 5 which is formed at an intermediate position of the valve main body 2 in the vertical direction. The valve seat 6 is integrally formed with the valve main body 2 in an upper end of the introduction channel 3, that is, an opening portion to the valve chamber 5. The valve seat 6 is constructed by a wall body which rises up vertically upward from an opening edge portion of the upper end of the introduction channel 3 and has a fixed height, and the wall body extends so as to surround the opening of the upper surface of the introduction channel 3. Therefore, the valve seat 6 has a ring-like planar shape as a whole.

Further, an upper end portion of the wall body has a semicircular (dome-like) cross sectional shape, and the valve body 27 comes into contact with a top 6a of the wall body and closes the introduction channel 3 when closing the valve. Therefore, a diameter D of a circle drawn by the top 6a of the wall body comes to a pressure receiving diameter when any creep deformation is not generated in the valve body 27.

In the meantime, the valve body 27 is a discoid member having a greater diameter than the valve seat 6 in such a manner as to come into contact with the valve seat 6 and close the introduction channel 3, and is formed by a resin or a rubber in order to prevent a valve leakage from being generated at normal times (when closing the valve). A portion of the valve body 27 with which the top 6a of the valve seat 6 comes into contact is called as a valve seat contact portion, and is denoted by reference numeral 28 in the drawings. Further, the valve body 27 is fixed to a lower surface of the valve holder 8 by caulking a lower end peripheral edge portion 8a of the valve holder 8.

Depressed portions 22 and 23 are disposed in a surface (a lower surface) facing the valve seat 6 in the valve body 27. The depressed portions are constructed by a hole (hereinafter, refer to as "inner hole") 22 which is formed in a center axis portion of the valve body 27 and has a circular planar shape, and a groove (hereinafter, refer to as "outer groove") which is formed into a ring shape so as to surround the valve seat 6, and the inner hole 22 and the outer groove 23 are both formed at positions near the contact position (the valve seat contact portion 28) of the valve seat 6 for easily absorbing a deformation (mentioned later) of the valve body 27.

Further, the outer groove 23 is formed concentrically with the valve seat 6 in such a manner that an inner edge 23a of the outer groove 23 has a fixed distance W2 with respect to the valve seat 6 (the valve seat top 6a). This is because of making the deformation of the valve body 27 even. For the same reason, the inner hole 22 is formed in such a manner that a peripheral edge 22a of the inner hole 22 has a fixed distance W1 with respect to the valve seat 6 (the valve seat top 6a).

A cross sectional shape of the inner hole 22 and the outer groove 23 is not particularly limited. However, in the present embodiment, the inner hole 22 has an approximately rectangular vertical cross sectional shape in which corner portions of peripheral edges (lower edge portions of an inner peripheral surface) and corner portions of a top surface (an upper surface) are rounded. Further, the outer groove 23 has an approximately square vertical cross sectional shape in which corner portions of an inner peripheral edge (a lower edge portion of an inside inner peripheral surface) and an outer peripheral edge (a lower edge portion of an outside inner peripheral surface) are rounded and a top surface (an upper surface) is formed into a semicircular shape (a dome shape).

The valve holder 8 retaining the valve body 27 has a bottomed open-top cylindrical (cup-shaped) entire shape, and is installed within the valve chamber 5 so as to be slidable up and down along an inner peripheral surface of the valve chamber 5. The valve holder 8 accommodates the valve closing spring 9 from an upper surface side and supports a lower portion of the valve closing spring 9. Further, the valve holder 8 is biased downward by the valve closing spring 9, thereby achieving a function of pressing the valve body 27 fixed to a lower surface thereof against the valve seat 6. The valve closing spring 9 is constructed by a coil spring, and is installed in a state in which the valve closing spring 9 is compressed between the valve holder 8 and the spring receiving member 10.

An upper end portion of the valve closing spring 9 is supported by the spring receiving member 10 which is disposed in an upper portion of the valve chamber. The spring receiving member 10 is provided in an outer peripheral surface thereof with a male screw 12 which is threadably mounted to a female screw 13 formed on an inner peripheral surface of the valve chamber, and can increase and reduce a biasing force (a set pressure) of the valve closing spring 9 by rotating the spring receiving member 10 and changing a vertical position of the spring receiving member 10, thereby adjusting a valve opening pressure. Further, a plurality of communicating holes 11 passing through the spring receiving member 10 in the vertical direction are pierced on an outer peripheral portion of the spring receiving member 10. Therefore, the refrigerant flowing into from the introduction channel 3 when opening the valve goes forward to the upper portion of the valve chamber 5 through a portion between an outer peripheral surface of the valve holder 8 and an inner peripheral surface of the valve main body 2, and further flows to the release channel 4 from the valve chamber 5 through the communicating hole 11.

The release channel 4 is formed in the upper portion of the valve main body 2 in such a manner as to extend vertically upward from an upper surface portion of the valve chamber 5, and is open to the upper surface of the valve main body 2 in such a manner as to allow the refrigerant within the valve chamber 5 to be released toward the external portion.

In the safety valve 21 according to the present embodiment structured as mentioned above, in a case where the refrigerant pressure introduced through the introduction channel 3 is equal to or less than a fixed pressure (a spring load of the valve closing spring 9), the valve body 27 comes into contact with the valve seat 6 by the biasing force of the valve closing spring 9 and the flow channel from the introduction channel 3 to the release channel 4 is shut off in the same manner as that of the conventional safety valve 1 mentioned above. On the contrary, when the refrigerant pressure introduced from the introduction channel 3 goes beyond the fixed pressure (the spring load of the valve closing spring 9), the valve body 27 moves backward (moves upward) from the valve seat 6 together with the valve holder 8 against the biasing force of the valve closing spring 9, and the flow channel from the introduction channel 3 to the release channel 4 is opened. Thus, the refrigerant within the refrigerant cycle is released to the external portion through the introduction channel 3, the valve chamber 5 and the release channel 4 (refer to an arrow R), and the refrigerant pressure within the refrigerant cycle can be lowered.

On the other hand, in a case where the valve body 27 undergoes the creep deformation due to use with age, the following deformation is generated in the safety valve 21 according to the present embodiment.

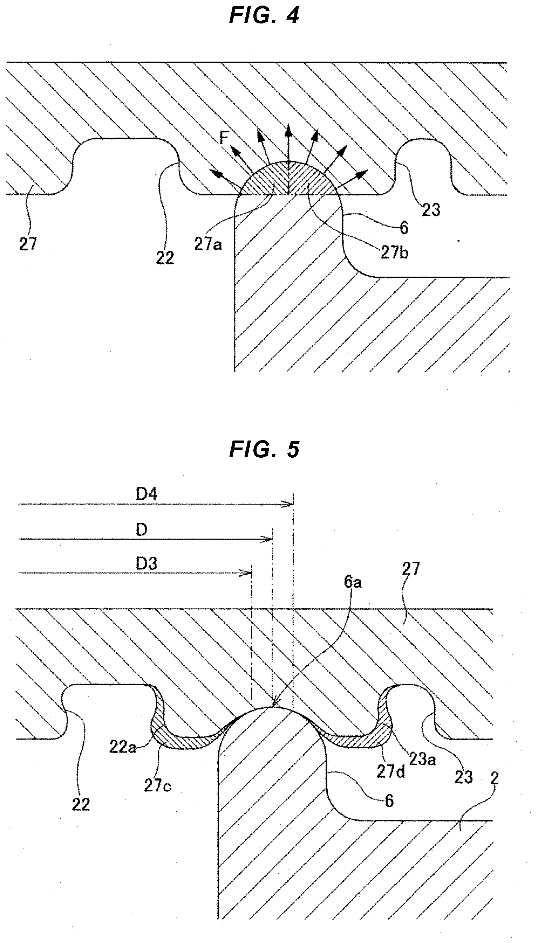

As shown in Fig. 4, the valve body 27 is exposed to the pressure from the valve seat 6 in the same manner as the conventional structure (Fig. 11), and the valve seat 6 eats into the valve body 27. However, in the present embodiment, as shown in Fig. 5, the inner hole 22 is disposed near the inner side of the valve seat contact portion (the valve seat top 6a), and the outer groove 23 is disposed near the outer side of the valve seat contact portion. Therefore, a deformation 27c to the inner side is absorbed by the inner hole 22, and a deformation 27d to the outer side is absorbed by the outer groove 23. In other words, in the present embodiment, it is possible to prevent the valve body 27 from bulging toward the valve seat side such as the conventional structure (Fig. 12) (hanging down along the inner peripheral surface or the outer peripheral surface of the valve seat 6) by proactively introducing the creep deformation of the valve seat contact portion to the inner hole 22 and the outer groove 23 (that is, transferring the deformation of the valve body 27 to the inner hole 22 and the outer groove 23) according to the promotion of the deformation of the outer edge (the peripheral edge) 22a of the inner hole 22 and the inner edge 23a of the outer groove 23 which are formed in the vicinity of the valve seat contact portion.

Further, in the conventional structure (Fig. 12), a fluctuation width of the pressure receiving diameter D, that is, a difference (D2 - D1) between the pressure receiving diameter D2 when deforming to the outer side and the pressure receiving diameter D1 when deforming to the inner side is great, and the fluctuation of the valve opening pressure (the error for the assumed pressure) is great. However, according to the present embodiment, it is possible to suppress a fluctuation width of the pressure receiving diameter D, that is, a difference (D4 - D3) between a pressure receiving diameter D4 when deforming to the outer side and a pressure receiving diameter D3 when deforming to the inner side in comparison with the conventional structure, and it is possible to reduce a fluctuation of the valve opening pressure (an error for the assumed pressure).

Further, in the present embodiment, each of the distances W1 and W2 between the valve seat 6 (the valve seat contact portion 28) and the inner hole 22 and the outer groove 23 is set to be fixed. Therefore, the deformation of the valve body 27 is even as a whole even if the valve body 27 is deformed, the contact state between the valve body 27 and the valve seat 6 is less changed, and the valve leakage is hard to be generated.

The embodiment according to the present invention is described above. However, it is apparent for a person skilled in the art that the present invention can be variously changed and modified within the scope of the claims without being limited to the embodiment.

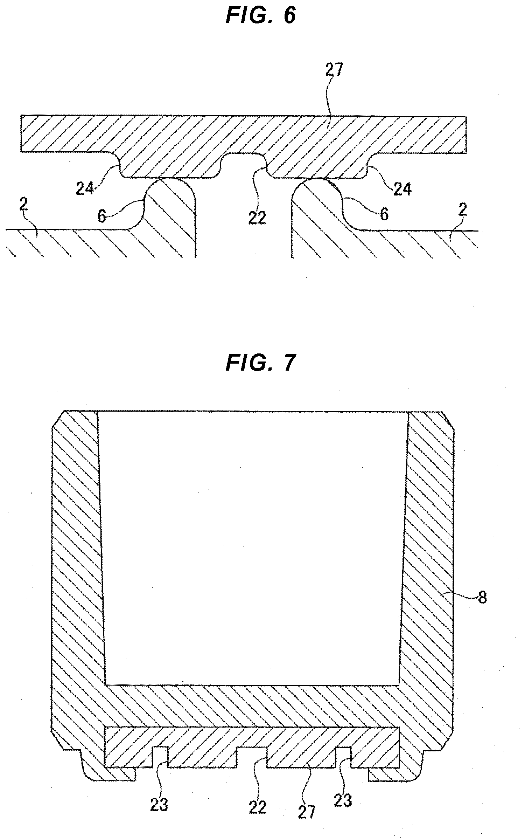

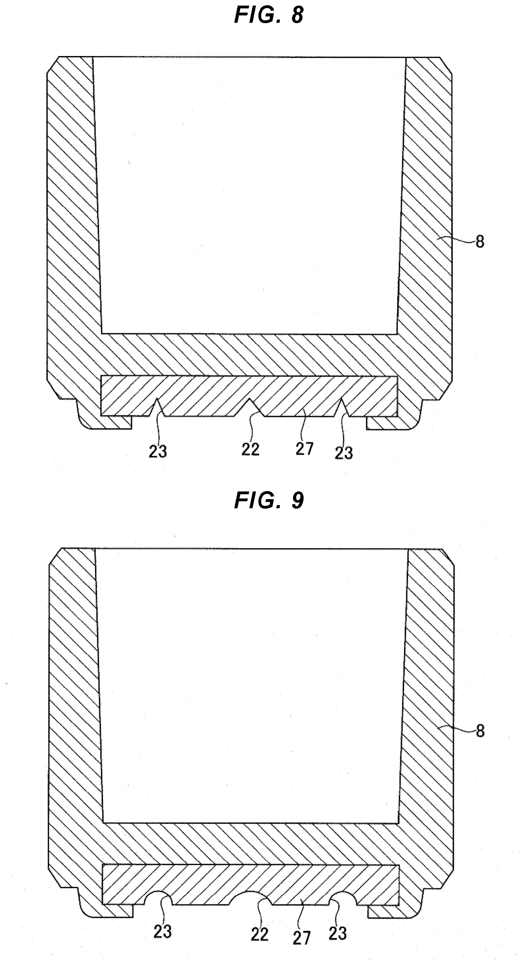

For example, in the embodiment, the hole 22 and the groove 23 are respectively disposed as the depressed portions in the inner side and the outer side of the valve seat contact portion. However, a step portion 24 may be provided as shown in Fig. 6 in place of the outer groove. Further, the same groove as the outer groove 23 may be provided in place of the hole in the inner side of the valve seat contact portion. Further, the cross sectional shapes of the inner hole 22 and the outer groove 23 can be formed into various shapes such as a rectangle or a square (refer to Fig. 7), a triangle (refer to Fig. 8), a circular arc (refer to Fig. 9) or polygonal shapes.

Further, the valve chamber upper portion (the release channel 4) may be provided with a means for visually observing the actuation of the safety valve, for example, a sheet material which is blown or broken by the refrigerant (fluid). Further, a bent pipe arrangement for changing the orientation of the fluid released through the release channel 4 or a pipe arrangement for introducing the released fluid to the other places may be connected to the release channel 4.

Further, the valve gear according to the present invention can be preferably used for a refrigeration cycle system provided with a refrigerant cycle such as an air conditioner, a freezer and a refrigerator. However, an intended use is not limited to them, and the valve gear which can be used for various intended uses may be constructed on the basis of the present invention. Therefore, in addition to the thermal medium (refrigerant and heat medium), various liquids and gases can be included in the "fluid" in the present invention.

### REFERENCE SIGNS LIST

1 valve gear (safety valve)
2 valve main body
3 introduction channel
4 release channel
5 valve chamber
6 valve seat
6a top of valve seat (wall body constructing valve seat)
7, 27 valve body
7a, 7b, 27a, 27b structure portion of valve body pushed aside circumferentially by creep deformation (eating of valve seat)
7c, 7d, 27c, 27d deformed portion of valve body by creep deformation
8 valve holder
8a lower end peripheral edge portion (caulked portion) of valve holder
9 valve closing spring (compression coil spring)
10 spring receiving member
11 communicating hole
12a male screw (adjusting screw)
12b female screw (adjusting screw)
22 inner hole (depressed portion)
22a outer edge (peripheral edge) of inner hole
23 outer groove (depressed portion)
23a inner edge of outer groove
24 step portion (depressed portion)
28 valve seat contact portion
D, D1, D2, D3, D4 pressure receiving diameter
F surface pressure applied to valve body from valve seat
W1 distance from valve seat contact portion to inner hole outer edge
W2 distance from valve seat contact portion to outer groove inner edge

## Claims

1. A valve gear comprising:
a valve main body (2) which includes a valve chamber (5) communicating with an introduction channel (3) for introducing a refrigerant and a release channel (4) for releasing the refrigerant to an external portion;
a valve seat (6) which is formed at an end portion of the introduction channel (3) in the valve chamber side;
a valve body (27) which is disposed within the valve chamber (5) so as to be movable forward and backward with respect to the valve seat (6); and
a valve closing spring (9) which biases the valve body (27) toward the valve seat (6),
wherein in a case where the refrigerant flowing into the valve gear through the introduction channel (3) is equal to or less than a fixed pressure, the valve body (27) is seated on the valve seat (6) on the basis of a biasing force of the valve closing spring (9), thereby shutting off a flow channel from the introduction channel (3) to the release channel (4), and in a case where the refrigerant flowing into the valve gear from the introduction channel (3) becomes greater than the fixed pressure, the valve body (27) moves backward from the valve seat (6) against the biasing force of the valve closing spring (9), thereby opening the flow channel from the introduction channel (3) to the release channel (4) and releasing the refrigerant to the external portion,
wherein the valve seat (6) is constructed by a wall body which rises up vertically upward from an opening edge portion of the upper end of the introduction channel (3) and has a fixed height, and the wall body extends so as to surround the opening of the upper surface of the introduction channel (3),
wherein an upper end portion of the wall body has a semicircular dome-like cross sectional shape, and the valve body (27) is disposed to come into contact with a top (6a) of the wall body and to close the introduction channel (3) when closing the valve,
wherein the valve body (27) is made of a soft material containing a resin or a rubber as a major component, and
wherein depressed portions (22, 23)are provided in a surface of the valve body (27) in a side facing the introduction channel (3),
the depressed portions (22, 23) including an outer groove (23) which is formed in an outer side of the valve seat (6) in such a manner as to surround the valve seat (6) and an inner hole (22) which is formed in an inner side of the valve seat (6).

2. The valve gear according to claim 1, wherein the valve seat (6) has an annular entire shape,
the inner hole (22) is formed in such a manner that a peripheral edge (22a) of the inner hole (22) has a fixed distance (W1) with respect to the valve seat (6),
and the outer groove (23) is formed concentrically with the valve seat (6) in such a manner that an inner edge (23a) of the outer groove (23) has a fixed distance (W2) with respect to the valve seat (6).

3. The valve gear according to claim 1 or 2, wherein the groove (23) has a cross sectional shape of any of a rectangular, triangular, polygonal or arc-shaped form.

## Patentansprüche

1. Ventilvorrichtung, umfassend:
einen Ventilhauptkörper (2), der eine Ventilkammer (5) umfasst, die mit einem Einlasskanal (3) zum Einlass eines Kältemittels und mit einem Auslasskanal (4) zum Auslass des Kältemittels zu einem Außenbereich kommuniziert;
einen Ventilsitz (6), der an einem Endbereich des Einlasskanals (3) auf der Ventilkammerseite ausgebildet ist;
einen Ventilkörper (27), der innerhalb der Ventilkammer (5) angeordnet ist, so dass er vorwärts und rückwärts in Bezug auf den Ventilsitz (6) beweglich ist; und
eine Ventilschließfeder (9), die den Ventilkörper (27) in Richtung des Ventilsitzes (6) drückt,
wobei der Ventilkörper (27) in einem Fall, in welchem das Kältemittel, welches durch den Einlasskanal (3) in die Ventilvorrichtung strömt, unter einem festgelegten Druck oder einem geringeren Druck steht, auf den Ventilsitz (6) auf Grundlage einer Vorspannkraft der Ventilschließfeder (9) gedrückt wird, so dass ein Strömungskanal von dem Einlasskanal (3) zum Auslasskanal (4) geschlossen wird, und in einem Fall, in welchem das vom Einlasskanal (3) in die Ventilvorrichtung strömende Kältemittel den festgelegten Druck überschreitet, der Ventilkörper (27) sich gegen die Vorspannkraft der Ventilschließfeder (9) vom Ventilsitz (6) wegbewegt, so dass der Strömungskanal von dem Einlasskanal (3) zu dem Auslasskanal (4) geöffnet wird und das Kältemittel in den Außenbereich abgelassen wird,
wobei der Ventilsitz (6) durch einen Wandkörper gebildet wird, der von einem Öffnungsrandbereich des oberen Endes des Einlasskanals (3) senkrecht nach oben aufsteigt und eine feste Höhe aufweist, welcher Wandkörper sich derart erstreckt, dass er die Öffnung der oberen Oberfläche des Einlasskanals (3) umgibt,
wobei ein oberer Endbereich des Wandkörpers eine halbkreisförmige kuppelartige Querschnittsform aufweist, und der Ventilkörper (27) dazu angeordnet ist, mit einer Oberseite (6a) des Wandkörpers in Berührung zu kommen und den Einlasskanal (3) zu schließen, wenn das Ventil geschlossen wird,
wobei der Ventilkörper (27) aus einem weichen Material besteht, das ein Harz oder Gummi als Hauptbestandteil enthält, und
wobei eingedrückte Teile (22,23) in einer Oberfläche des Ventilkörpers (27) in einer Seite vorgesehen ist, die den Einlasskanal (3) zugewandt ist,
welche eingedrückten Teile (22,23) eine äußere Nut (23) umfassen, die in einer äußeren Seite des Ventilsitzes (6) derart ausgebildet ist, dass sie den Ventilsitz (6) umgibt, und ein inneres Loch (22), welches an einer inneren Seite des Ventilsitzes (6) ausgebildet ist.

2. Ventilvorrichtung gemäß Anspruch 1, bei welcher der Ventilsitz (6) eine ringförmige Gesamtform aufweist,
und das innere Loch (22) derart ausgebildet ist, dass ein Umfangsrand (22a) des inneren Lochs (22) einen festen Abstand (W1) vom Ventilsitz (6) aufweist,
und die äußere Nut (23) konzentrisch mit dem Ventilsitz (6) derart ausgebildet ist, dass ein innerer Rand (23a) der äußeren Nut (23) einen festen Abstand (W2) vom Ventilsitz (6) aufweist.

3. Ventilvorrichtung gemäß Anspruch 1 oder 2, bei welcher die Nut (23) eine Querschnittsform aufweist, die aus einer rechteckigen, dreieckigen, polygonalen oder bogenförmigen Form ausgewählt ist.

## Revendications

1. Commande de soupape comportant :
un corps de soupape principal (2) qui inclut une chambre de soupape (5) en communication avec un canal d'introduction (3) pour introduire un fluide frigorigène et un canal de libération (4) pour libérer le fluide frigorigène vers une partie externe ;
un siège de soupape (6) qui est formé sur une partie d'extrémité du canal d'introduction (3) dans le côté de la chambre de soupape ;
un corps de soupape (27) qui est disposé à l'intérieur de la chambre de soupape (5) de manière à être mobile vers l'avant et vers l'arrière par rapport au siège de soupape (6) ; et
un ressort de fermeture de soupape (9) qui rappelle le corps de soupape (27) vers le siège de soupape (6),
dans laquelle dans un cas où le fluide frigorigène s'écoulant dans la commande de soupape par le canal d'introduction (3) est égal ou inférieur à une pression fixe, le corps de soupape (27) est en appui sur le siège de soupape (6) sur la base d'une force de rappel du ressort de fermeture de soupape (9), en obturant ainsi un canal d'écoulement allant du canal d'introduction (3) jusqu'au canal de libération (4), et dans un cas où le fluide frigorigène s'écoulant dans la commande de soupape à partir du canal d'introduction (3) devient supérieur à la pression fixe, le corps de soupape (27) se déplace vers l'arrière à partir du siège de soupape (6) à l'encontre de la force de rappel du ressort de fermeture de soupape (9), en ouvrant ainsi le canal d'écoulement allant du canal d'introduction (3) jusqu'au canal de libération (4) et libérant le fluide frigorigène vers la partie externe,
dans laquelle le siège de soupape (6) est construit par un corps de paroi qui s'élève verticalement vers le haut à partir d'une partie de bord d'ouverture de l'extrémité supérieure du canal d'introduction (3) et a une hauteur fixe, et le corps de paroi s'étend de manière à entourer l'ouverture de la surface supérieure du canal d'introduction (3),
dans laquelle une partie d'extrémité supérieure du corps de paroi a une forme de section transversale analogue à un dôme semi-circulaire, et le corps de soupape (27) est disposé pour venir en contact avec un dessus (6a) du corps de paroi et pour fermer le canal d'introduction (3) lors de la fermeture de la soupape,
dans laquelle le corps de soupape (27) est constitué d'un matériau souple contenant une résine ou un caoutchouc en tant que composant principal, et
dans laquelle des parties en creux (22, 23) sont prévues dans une surface du corps de soupape (27) dans un côté dirigé vers le canal d'introduction (3),
les parties en creux (22, 23) incluant une rainure extérieure (23) qui est formée dans un côté extérieur du siège de soupape (6) d'une telle manière qu'elle entoure le siège de soupape (6) et un trou intérieur (22) qui est formé dans un côté intérieur du siège de soupape (6).

2. Commande de soupape selon la revendication 1, dans laquelle le siège de soupape (6) a une forme annulaire complète,
le trou intérieur (22) est formé d'une telle manière qu'un bord périphérique (22a) du trou intérieur (22) a une distance fixe (W1) par rapport au siège de soupape (6),
et la rainure extérieure (23) est formée de manière concentrique au siège de soupape (6) d'une telle manière qu'un bord intérieur (23a) de la rainure intérieure (23) a une distance fixe (W2) par rapport au siège de soupape (6).

3. Commande de soupape selon la revendication 1 ou 2, dans laquelle la rainure (23) a une forme de section transversale ayant une forme quelconque parmi rectangulaire, triangulaire, polygonale ou en arc.
